# EUROPÄISCHE PATENTANMELDUNG

(11) **EP 1 646 104 A1**
(43) Veröffentlichungstag der Anmeldung: **12.04.2006**
(21) Anmeldenummer: 05106550.6
(22) Anmeldetag: 18.07.2005
(51) Int. Cl.: H01M 16/00, H01M 10/42

(54) **Vorrichtung zur Energieversorgung des Bordnetzes eines Kraftfahrzeugs**

(30) Priorität: 17.09.2004 DE 102004045248
(71) Anmelder: ROBERT BOSCH GMBH, 70442 Stuttgart (DE)
(72) Erfinder: Hauler, Peter, 76275, Ettlingen (DE); Hoffmann, Norbert, 71679, Asperg (DE); Aumayer, Richard, 31199, Diekholzen (DE); Schweiggart, Hubert, 70191, Stuttgart (DE)

(57) **Zusammenfassung**

Die Erfindung betrifft eine Vorrichtung zur Energieversorgung des Bordnetzes eines Kraftfahrzeugs. Diese weist einen Akkumulator auf, der mit mehreren in Reihe geschalteten Akkumulatorzellen versehen ist. Parallel zu jeder Akkumulatorzelle ist ein Doppelschichtkondensator geschaltet. Bei einer derartigen Vorrichtung sind die Doppelschichtkondensatoren wirksam gegen Überspannungen geschützt, die bei Ladungswechseln auftreten.

## Beschreibung

Die Erfindung betrifft eine Vorrichtung zur Energieversorgung des Bordnetzes eines Kraftfahrzeugs.

### Stand der Technik

Es ist bereits bekannt, das Bordnetz eines Kraftfahrzeugs mittels eines Akkumulators, der mehrere Akkumulatorzellen aufweist, mit Energie zu versorgen.

Weiterhin ist es bereits bekannt, Doppelschichtkondensatoren als Unterstützung der elektrischen Versorgung in Kraftfahrzeugen einzusetzen. Liegt beispielsweise ein 12V-Bordnetz vor, dann benötigt der verwendete Akkumulator insgesamt sechs in Reihe geschaltete Akkumulatorzellen zum Erhalt der benötigten Bordnetzspannung. Dem Akkumulator ist eine Reihenschaltung von insgesamt sechs Doppelschichtkondensatoren parallelgeschaltet, die gegen Überspannung zu schützen sind. Zu diesem Zweck ist entweder zu jedem der in Reihe geschalteten Doppelschichtkondensatoren ein Ohmscher Widerstand parallel geschaltet, oder es ist eine aufwändige Schwellendetektion unter Verwendung eines Komparators vorgesehen, welcher einen Ableitwiderstand steuert. Mit einer derartigen Balancierung wird erreicht, dass die Kondensatorspannungen bei Ladungswechseln stets unter der Dissoziationsspannung liegen, die im Bereich von etwa 2,7 V liegt. Im Falle eines Betriebes mit einer Kondensatorspannung, die oberhalb der Dissoziationsspannung liegt, kann eine Zerstörung des jeweiligen Doppelschichtkondensators auftreten.

Ferner ist aus der DE 101 50 376 A1 eine Vorrichtung zum Ausgleich des Ladezustands von in Reihe geschalteten Akkumulatoren bekannt. Bei dieser bekannten Vorrichtung sind ein Kondensator, mehrere zwischen dem Kondensator und den Akkumulatoren angeordnete Schalter und eine Logik vorgesehen. Die Logik dient zur Messung der an den Akkumulatoren anliegenden Spannungen und zur Aktivierung eines die Schalter steuernden Treibers dann, wenn die an den Akkumulatoren anliegenden Spannungen einen vorgegebenen Differenz-Schwellenwert überschreiten. Der Kondensator wird zum Zwecke eines Ladungsaustausches über die Schalter abwechselnd mit den einzelnen Akkumulatoren verbunden. Diese bekannte Vorrichtung wird beispielsweise in einem Kraftfahrzeug verwendet, das zwei in Serie geschaltete Batterien aufweist, die von einem Generator versorgt werden.

Aus der US-A-5,821,006 ist eine Batteriepackung bekannt, die eine oder mehrere Batteriezellen enthält. Die bekannte Batteriepackung ist zur Energieversorgung eines tragbaren Gerätes vorgesehen. Die Batteriepackung enthält weiterhin wenigstens einen integrierten Kondensator, der zur Bildung einer hybriden Zellen-Kondensator-Anordnung um eine Batteriezelle gewunden ist. Diese hybride Zellen-Kondensator-Anordnung benötigt wenig zusätzlichen Platz innerhalb der Batteriepackung. Der Kondensator ist vorzugsweise in elektrischer Hinsicht parallel zur Zellenvorrichtung geschaltet, um kurze Energiebursts bereitzustellen, die vom tragbaren Gerät benötigt werden.

### Vorteile der Erfindung

Eine Vorrichtung mit den im Anspruch 1 angegebenen Merkmalen weist demgegenüber den Vorteil auf, dass auf eine zusätzliche Balancierungsschaltung verzichtet werden kann. Durch das direkte Parallelschalten eines Doppelschichtkondensators zu einer Akkumulatorzelle wird erreicht, dass die maximale Kondensatorspannung durch die maximale Zellenspannung des Akkumulators begrenzt wird. Die kritische Dissoziationsspannung der Doppelschichtkondensatoren wird nicht erreicht.

Eine Bleisäure-Batterie beispielsweise besitzt eine Zellenspannung von maximal 2,2 V. Die Dissoziationsspannung für handelsübliche Doppelschichtkondensatoren im Fahrzeugbereich beträgt beispielsweise 2,7 V. Somit sind keine zusätzlichen aktiven oder passiven Balancierungsbeschaltungen notwendig.

Durch die beanspruchte Parallelschaltung der einzelnen Akkumulatorzellen mit jeweils einem Doppelschichtkondensator wird die Doppelschichtkapazität der jeweiligen Akkumulatorzelle erhöht und dadurch ihre Leistungsversorgung stark verbessert. Leistungsimpulse wie kurze hohe Stromimpulse werden in dem gebildeten Verband weitgehend aus den Doppelschichtkondensatoren gespeist. Dadurch werden die Akkumulatorzellen nur sehr flach zyklisiert, wobei dies abhängig vom Innenwiderstand der jeweiligen Akkumulatorzelle ist. Die Zyklenfestigkeit der gesamten Energiequelle ist erhöht, da die Doppelschichtkondensatoren als Leistungsspeicher weitgehend zyklenfest sind. Sie beherrschen bis zu 500 000 volle Auf- und Entladezyklen. Die bedeutet, dass durch die Erfindung die Lebenserwartung der Akkumulatorzellen vergrößert ist.

Weitere vorteilhafte Eigenschaften der Erfindung ergeben sich aus deren nachfolgender Erläuterung anhand der Zeichnung.

### Zeichnung

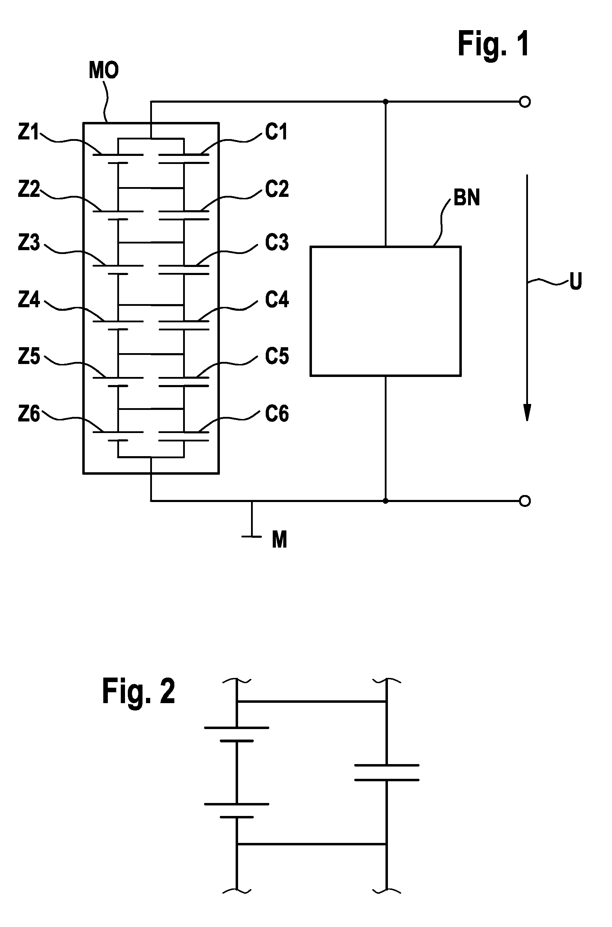

Die Figur 1 zeigt eine Vorrichtung zur Energieversorgung des Bordnetzes eines Kraftfahrzeugs unter Verwendung eines Akkumulators, der mehrere in Reihe geschaltete Akkumulatorzellen aufweist. Die Figur 2 zeigt ein Schaltungsteil zur Veranschaulichung einer alternativen Ausführungsform, bei welcher Akkumulatorzellen mit kleineren Zellenspannungen verwendet werden.

### Beschreibung

In der Figur 1 ist eine Vorrichtung zur Energieversorgung des Bordnetzes eines Kraftfahrzeugs dargestellt. Die gezeigte Vorrichtung weist einen Akkumulator auf, der mit insgesamt sechs in Reihe geschalteten Akkumulatorzellen Z1, Z2, Z3, Z4, Z5 und Z6 versehen ist. Mittels dieses Akkumulators wird eine Bordnetzspannung U für ein mehrere Verbraucher enthaltendes Bordnetz BN bereitgestellt, die etwa 12 V beträgt.

Parallel zu jeder Akkumulatorzelle ist ein Doppelschichtkondensator geschaltet. So ist parallel zur Akkumulatorzelle Z1 ein Doppelschichtkondensator C1, parallel zur Akkumulatorzelle Z2 ein Doppelschichtkondensator C2, parallel zur Akkumulatorzelle Z3 ein Doppelschichtkondensator C3, parallel zur Akkumulatorzelle Z4 ein Doppelschichtkondensator C4, parallel zur Akkumulatorzelle Z5 ein Doppelschichtkondensator C5 und parallel zur Akkumulatorzelle Z6 ein Doppelschichtkondensator C6 geschaltet. Die Kathode der Akkumulatorzelle Z6 und der untere Anschluß des Doppelschichtkondensators C6 sind jeweils mit einem Masseanschluß M verbunden, mit dem auch das Bordnetz BN kontaktiert ist.

Die Akkumulatorzellen Z1-Z6 bilden zusammen mit den Doppelschichtkondensatoren C1-C6 ein Modul MO, d.h. eine bauliche Einheit. Diese weist zwei Anschlüsse auf, von denen der obere (positive Pol) mit dem Bordnetz BN und der untere (negative Pol) mit dem Masseanschluß M verbunden ist.

Bei einer Vorrichtung, wie sie vorstehend beschrieben wurde, sind die in Reihe geschalteten Doppelschichtkondensatoren gegenüber bei Ladungswechseln auftretenden Überspannungen geschützt. Dazu bedarf es keiner zusätzlichen aktiven oder passiven Balancierungsbeschaltung, wie sie bei bekannten Vorrichtungen notwendig ist. Ein Betrieb mit Kondensatorspannungen, die oberhalb der Dissoziationsspannung liegen, tritt nicht auf. Dadurch wird eine Zerstörung der Doppelschichtkondensatoren wirksam verhindert.

Wird ein Bleisäure-Akkumulator verwendet, wie es in Kraftfahrzeugen weit verbreitet ist, dann liegt eine Zellenspannung von maximal 2,2 V vor. Da die bei Kraftfahrzeugen üblicherweise verwendeten Doppelschichtkondensatoren eine Dissoziationsspannung von 2,7 V besitzen, bedarf es keiner zusätzlichen Balancierung zum Abbau von Überspannungen.

Die Erfindung ist nicht nur bei 12V-Bordnetzen verwendbar. Sie lässt sich ebenso beim Vorliegen von 42V-Bordnetzen implementieren. In diesem Fall ist die Anzahl der Akkumulatorzellen an das erhöhte Spannungsniveau entsprechend anzupassen.

Die Kapazitätswerte der in einer Vorrichtung zur Spannungsversorgung verwendeten Doppelschichtkondensatoren sollten gleich groß sein, um für jede Akkumulatorzelle die gleichen Bedingungen für einen Ladungswechsel zu schaffen.

Weiterhin sollte die Verdrahtung zwischen den Akkumulatorzellen und den Doppelschichtkondensatoren jeweils möglichst kurz und niederohmig sein.

Alternativ zu dem oben beschriebenen Ausführungsbeispiel kann der jeweils benötigte Kapazitätswert auch dadurch erreicht werden, dass jeder Akkumulatorzelle mehrere Doppelschichtkondensatoren parallel geschaltet werden, um den Innenwiderstand des Systems zu verkleinern.

Bei einer Verwendung von Akkumulatorenzellen mit kleineren Zellenspannungen, beispielsweise NiMH-Zellen mit 1,2 V-Zellenspannung, kann die Balancierung durch Parallelschaltung von zwei in Reihe geschalteten Akkumulatorzellen zum Doppelschichtkondensator erreicht werden, wie es in der Figur 2 veranschaulicht ist.

## Patentansprüche

1. Vorrichtung zur Energieversorgung des Bordnetzes eines Kraftfahrzeugs, mit einem Akkumulator, der mehrere in Reihe geschaltete Akkumulatorzellen aufweist, **dadurch gekennzeichnet, dass** parallel zu jeder Akkumulatorzelle oder parallel zu zwei in Reihe geschalteten Akkumulatorenzellen (Z1,...,Z6) zumindest ein Doppelschichtkondensator (C1,...,C6) geschaltet ist.

2. Vorrichtung nach Anspruch 1, **dadurch gekennzeichnet, dass** der Akkumulator und die Doppelschichtkondensatoren ein Modul (MO) bilden.

3. Vorrichtung nach Anspruch 1 oder 2, **dadurch gekennzeichnet, dass** die Kapazitätswerte der Doppelschichtkondensatoren gleich sind.

4. Vorrichtung nach einem der vorhergehenden Ansprüche, **dadurch gekennzeichnet, dass** der Akkumulator je nach Gesamtspannungswert eine bestimmte Anzahl in Reihe geschalteter Akkumulatorzellen aufweist, denen jeweils zumindest ein Doppelschichtkondensator parallelgeschaltet ist.

5. Vorrichtung nach einem der vorhergehenden Ansprüche, **dadurch gekennzeichnet, dass** der Akkumulator für eine 12 V-Versorgung sechs in Reihe geschaltete Akkumulatorzellen aufweist, denen jeweils zumindest ein Doppelschichtkondensator parallelgeschaltet ist.

6. Vorrichtung nach einem der vorhergehenden Ansprüche, **dadurch gekennzeichnet, dass** der Akkumulator eine Zellenspannung aufweist, die unter der Dissoziationsspannung der angeschlossenen Doppelschichtkondensatoren liegt.

7. Vorrichtung nach Anspruch 6, **dadurch gekennzeichnet, dass** der Akkumulator ein Blausäure-Akkumulator ist.
